# EUROPEAN PATENT APPLICATION

(11) **EP 4 775 959 A1**
(43) Date of publication of application: **15.07.2026**
(21) Application number: 26150144.9
(22) Date of filing: 05.01.2026
(51) Int. Cl.: G01N 21/3504, G01J 3/42, G01N 21/39, G01N 21/31

(54) **SPECTRAL FILTER GAS DETECTION USING INTEGRATED SILICON PHOTONICS**

(30) Priority: 13.01.2025 IN 202511003020; 11.12.2025 US 202519416499
(71) Applicant: Honeywell International Inc., Charlotte, NC 28202 (US)
(72) Inventor: KISHORE, Kuna Venkat Satya Rama, Charlotte, 28202 (US); VARTAK, Sameer Dinkar, Charlotte, 28202 (US); SHAFAI, Moin S, Charlotte, 28202 (US); HOYT, Chad, Charlotte, 28202 (US)
(74) Representative: Haseltine Lake Kempner LLP

(57) **Abstract**

The present disclosure provides a gas detection system (100) for detecting target gases having spectral absorption peaks. The system (100) comprises a light source (104), at least three spectral filters (108, SF1-SFn) with each filter having a filtering range corresponding to separate spectral absorption peaks of only one target gas, one or more photodetectors (116, PD1-PDn) to receive light from the light source, and processing circuitry (120). The processing circuitry determines absorption strength of each spectral filter output, compares the absorption strength to the spectral absorption peaks of the target gases, and based on the comparison, determines presence of target gases. The spectral filters may be formed on a substrate using integrated silicon photonics and may have filtering ranges less than 50 nanometers to provide selective detection of gas species.

## Description

### CROSS-REFERENCE TO RELATED APPLICATIONS

This application claims priority to India Patent Application No. 202511003020, titled SELECTIVE MULTI GAS DETECTION WITH DISCRETE SPECTRAL FILTERS AND OPTICAL PROCESSING WITH SILICON PHOTONICS IMPLEMENTATION, filed January 13, 2025, which is hereby incorporated by reference in its entirety.

### FIELD OF INVENTION

The present disclosure relates to gas detection systems.

### BACKGROUND

Gas detection systems play a fundamental role in industrial safety, environmental monitoring, and process control applications. These systems are designed to identify and quantify various gas species that may be present in industrial environments, manufacturing processes, or ambient air. Traditional gas detection approaches include electrochemical sensors, catalytic sensors, and optical-based detection methods, each with distinct advantages and limitations.

Electrochemical and catalytic gas sensors, while widely deployed, face challenges related to selectivity when multiple gas species are present simultaneously. These sensors may exhibit cross-sensitivity to gases other than the target species, leading to potential false readings or reduced accuracy in multi-gas environments. Additionally, certain corrosive gases can cause sensor poisoning, degrading performance over time and reducing the operational lifespan of the detection system.

Optical spectroscopy-based gas detection methods offer advantages in terms of selectivity and sensitivity. These approaches typically involve directing light through a gas sample and analyzing the resulting absorption or transmission characteristics. Different gas species exhibit distinct spectral signatures, with absorption occurring at specific wavelengths corresponding to molecular vibrational and rotational transitions. However, conventional spectroscopic instruments tend to be complex, bulky, and expensive, making them less suitable for compact field applications or in-line process monitoring.

Many gas species exhibit overlapping spectral features, particularly when their molecular structures share similar characteristics. This spectral overlap can complicate the identification and quantification of individual gas species within a mixture. Traditional approaches to address this challenge include broad-spectrum analysis using Fourier Transform Infrared (FTIR) spectroscopy or wavelength-sweeping techniques, but these methods often require sophisticated instrumentation and complex signal processing algorithms.

Non-dispersive infrared (NDIR) sensors represent a simplified optical approach that focuses on specific wavelengths where target gases exhibit strong absorption. While NDIR sensors can be more compact and cost-effective than full spectroscopic systems, they typically target single gas species and may lack the selectivity needed for complex multi-gas environments.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Various embodiments described herein relate to gas detection systems and methods.

According to an aspect of the present disclosure, a gas detection system for detecting one or more target gases is provided. Each target gas has a plurality of spectral absorption peaks. The system comprises a light source. The system comprises at least three spectral filters, each spectral filter having a filtering range corresponding to a separate one of the spectral absorption peaks of only one of the one or more target gases. The system comprises one or more photodetectors to receive light from the light source. The system comprises processing circuitry to determine an absorption strength of an output of each of the spectral filters, compare the absorption strength of the output of each of the spectral filters to the spectral absorption peaks of the one or more target gases, and based on the comparison, determine a presence of one or more target gases.

According to other aspects of the present disclosure, the gas detection system may include one or more of the following features. A size of the filtering range of each of the spectral filters may be less than 50 nanometers. The light source may comprise an optical frequency comb. The system may further comprise an optical multiplexer, wherein the one or more photodetectors comprise only one photodetector, and wherein the optical multiplexer directs light separately from each of the spectral filters to the one photodetector. The one or more photodetectors may comprise one photodetector corresponding to each of the spectral filters. The system may further comprise at least three waveguides, each waveguide positioned to direct light from the light source to a respective spectral filter. The system may further comprise one or more additional spectral filters, each additional spectral filter having a filtering range that does not correspond to any of the spectral absorption peaks of one or more of the one or more target gases, wherein the processing circuitry further determines an absorption strength of an output of each of the additional spectral filters, compares the absorption strength of the output of each of the additional spectral filters to the spectral absorption peaks of the one or more target gases, and, based on the comparison, confirms a presence of one or more target gases. A test space of the system may be positioned between the light source and the spectral filters. A test space of the system may be positioned between the spectral filters and the one or more photodetectors. All of the spectral filters may be formed on a same substrate using integrated silicon photonics.

According to another aspect of the present disclosure, a method for detecting one or more target gases is provided. Each target gas has a plurality of spectral absorption peaks. The method comprises emitting light from a light source. The method comprises filtering the light using at least three spectral filters, each spectral filter having a filtering range corresponding to a separate one of the spectral absorption peaks of only one of the one or more target gases. The method comprises detecting the filtered light using one or more photodetectors to receive light from the light source. The method comprises determining an absorption strength of an output of each of the spectral filters. The method comprises comparing the absorption strength of the output of each of the spectral filters to the spectral absorption peaks of the one or more target gases. The method comprises, based on the comparison, determining a presence of one or more target gases.

According to other aspects of the present disclosure, the method may include one or more of the following features. A size of the filtering range of each of the spectral filters may be less than 50 nanometers. The light source may comprise an optical frequency comb. The one or more photodetectors may comprise only one photodetector, and the optical multiplexer may direct light separately from each of the spectral filters to the one photodetector. The one or more photodetectors may comprise one photodetector corresponding to each of the spectral filters. The method may further comprise directing light from the light source to the spectral filters using at least three waveguides, each waveguide positioned to direct light from the light source to a respective spectral filter. The method may further comprise filtering the light using one or more additional spectral filters, each additional spectral filter having a filtering range that does not correspond to any of the spectral absorption peaks of one or more of the one or more target gases, determining an absorption strength of an output of each of the additional spectral filters, comparing the absorption strength of the output of each of the additional spectral filters to the spectral absorption peaks of the one or more target gases, and based on the comparison, confirming a presence of one or more target gases. A test space of the system may be positioned between the light source and the spectral filters. A test space of the system may be positioned between the spectral filters and the one or more photodetectors. All of the spectral filters may be formed on a same substrate using integrated silicon photonics.

The foregoing general description of the illustrative embodiments and the following detailed description thereof are merely exemplary aspects of the teachings of this disclosure and are not restrictive.

### BRIEF DESCRIPTION OF FIGURES

The description of the illustrative embodiments is read in conjunction with the accompanying figures. It will be appreciated that, for simplicity and clarity of illustration, elements illustrated in the figures have not necessarily been drawn to scale, unless described otherwise. For example, the dimensions of some of the elements is exaggerated relative to other elements, unless described otherwise. Embodiments incorporating teachings of the present disclosure are shown and described with respect to the following figures presented herein.
FIG. 1 illustrates a block diagram of a gas detection system with multiple photodetectors, according to aspects of the present disclosure.
FIG. 2 illustrates a block diagram of a gas detection system with optical multiplexing, according to aspects of the present disclosure.
FIGS. 3-6 illustrate various different component arrangements for gas detection systems, according to aspects of the present disclosure.
FIG. 7 illustrates a block diagram of a control device for a gas detection system, according to aspects of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures are embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase is included in at least one embodiment of the present disclosure and is included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase is included in at least one example of the present disclosure and is included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature is optionally included in some examples, or it is excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information is transmitted to and/or received from these elements or components.

The term "component" may refer to an article, a device, or an apparatus that may comprise one or more surfaces, portions, layers and/or elements. For example, an example component may comprise one or more substrates that provide underlying layer(s) for the component and may comprise one or more elements that may form part of and/or are disposed on top of the substrate. In the present disclosure, the term "element" may refer to an article, a device, or an apparatus that may provide one or more functionalities.

Gas detection in industrial environments presents challenges related to selectivity and sensitivity when multiple gas species are present simultaneously. Traditional spectroscopic methods may encounter difficulties in distinguishing between gases with overlapping spectral features, particularly when detecting trace concentrations at parts-per-billion or parts-per-trillion levels. In various embodiments of the present disclosure, gas detection systems are provided for detecting one or more target gases addresses these challenges through the use of discrete spectral filtering techniques.

Each target gas exhibits a plurality of spectral absorption peaks across different wavelength ranges. These spectral absorption peaks represent characteristic molecular interactions with electromagnetic radiation at specific wavelengths. The spectral absorption peaks may occur in various regions of the electromagnetic spectrum, including ultraviolet, visible, near-infrared, mid-infrared, and far-infrared ranges. The wavelength positions and intensities of these spectral absorption peaks provide distinctive signatures that enable identification and quantification of individual gas species.

A gas detection system may utilize narrow wavelength bins to isolate specific spectral absorption peaks of target gases. Each wavelength bin corresponds to a discrete range of wavelengths, which may be substantially narrower than the broad spectral ranges used in conventional spectroscopic techniques. The narrow wavelength bins may have filtering ranges of, for example, less than 50 nanometers, and in some cases, may extend to sub-nanometer or picometer resolution. This approach enables selective detection by focusing on wavelength regions where target gases exhibit strong absorption while minimizing interference from overlapping spectral features of other gases.

The gas detection system may employ multiple spectral filters, each configured to pass light within a specific wavelength bin. The spectral filters may be designed to correspond to different spectral absorption peaks of the same target gas or to spectral absorption peaks of different target gases. By analyzing the absorption characteristics at multiple discrete wavelength bins, the system may achieve enhanced selectivity and improved concentration estimation compared to broadband spectroscopic methods.

A method for detecting one or more target gases may involve the sequential or parallel analysis of light at multiple discrete wavelength bins. The method may include generating light across a broad spectral range, filtering the light into narrow wavelength bins, and analyzing the absorption or transmission characteristics at each wavelength bin. The analysis may involve comparing measured absorption strengths to reference spectral libraries or predetermined threshold values to identify the presence and concentration of target gases.

The gas detection system may incorporate integrated photonics technology to implement multiple spectral filters on a single substrate. Integrated silicon photonics structures, such as micro-ring resonators, arrayed waveguide gratings, Mach-Zehnder interferometers, or Bragg waveguide gratings, may be used to realize the spectral filters. These structures may provide precise wavelength selectivity and may be fabricated using semiconductor manufacturing processes to achieve compact form factors suitable for field deployment.

The system may utilize high-resolution light sources to enable the narrow wavelength bin approach. Optical frequency combs, dual frequency combs, tunable laser diodes, or femtosecond lasers may serve as light sources capable of generating light with sufficient spectral resolution. These light sources may provide the wavelength precision needed to effectively utilize narrow spectral filters and achieve the desired gas detection selectivity.

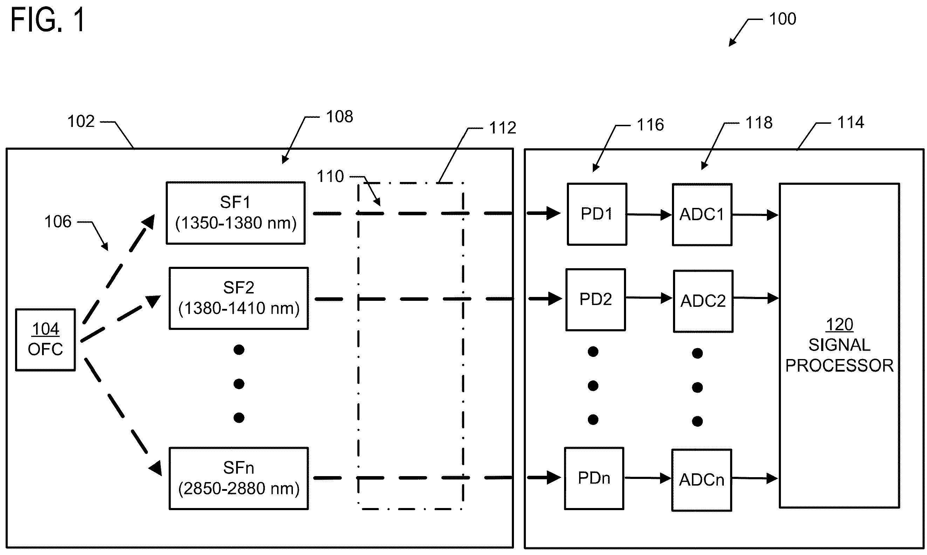

Referring to FIG. 1, a gas detection system 100 may be configured for detecting one or more target gases using discrete spectral filtering techniques. The gas detection system 100 may include a first substrate 102 and a second substrate 114, which may house various optical and electronic components for gas detection operations.

The first substrate 102 may contain an optical frequency comb 104, which may serve as a light source for generating laser light 106 across a range of wavelengths. The optical frequency comb 104 may provide high-resolution spectral output suitable for precise gas detection applications. In some cases, alternative light sources may be employed, including a chip-scale comb, tunable laser diode, or femtosecond laser, each capable of generating light with sufficient spectral resolution for narrow wavelength bin analysis.

The laser light 106 generated by the optical frequency comb 104 may be directed to spectral filters 108 positioned on the first substrate 102. The spectral filters 108 may be configured to filter the incoming laser light 106 into discrete wavelength bins, producing filtered laser light 110. The spectral filters 108 may include multiple filter elements, such as SF1 configured for wavelengths from 1350-1380 nm, SF2 configured for wavelengths from 1380-1410 nm, and SFn configured for wavelengths from 2850-2880 nm. Each spectral filter 108 may be tuned to pass a specific narrow wavelength range corresponding to distinct spectral absorption peaks of target gases. The spectral filters 208 may filter the incoming laser light 206 to produce filtered laser light 210 at designated wavelength ranges. The filtering range of each spectral filter 108 may be less than 50 nanometers (30 nm in the illustrated example), and in some cases, may achieve filtering ranges as narrow as 1 nanometer or sub-nanometer resolution, extending down to picometer resolution.

With continued reference to FIG. 1, the filtered laser light 110 from the spectral filters 108 may interact with a test space 112, where gas samples to be analyzed may be present. The test space 112 may allow the filtered laser light 110 to interact with target gases, resulting in absorption characteristics specific to the molecular structure of each gas species.

The second substrate 114 may house detection and processing components for analyzing the optical signals after interaction with the gas samples. The second substrate 114 may include photodetectors 116, which may be positioned to receive the filtered laser light 110 after the light has passed through or interacted with the test space 112. The photodetectors 116 may comprise one photodetector corresponding to each of the spectral filters 108, enabling parallel detection of multiple wavelength bins simultaneously.

The photodetectors 116 may be high-speed photodetectors made from indium gallium arsenide or indium phosphate material systems. These photodetector materials may provide gigahertz response capabilities, enabling rapid detection of optical signals with high temporal resolution. The photodetectors 116 may convert the optical signals into electrical signals proportional to the intensity of light received at each discrete wavelength bin.

As further shown in FIG. 1, the second substrate 114 may include analog-to-digital controllers 118, which may receive the electrical signals from the photodetectors 116. The analog-to-digital controllers 118 may convert the analog electrical signals into digital data suitable for computational analysis. The digital conversion process may preserve the spectral information contained in the optical signals while enabling subsequent digital signal processing operations.

The gas detection system 100 may further include a signal processor 120 positioned on the second substrate 114. The signal processor 120 may serve as processing circuitry configured to analyze the digital signals from the analog-to-digital controllers 118. The signal processor 120 may determine an absorption strength of an output of each of the spectral filters 108 based on the detected signal intensities. The signal processor 120 may compare the absorption strength of the output of each of the spectral filters 108 to the spectral absorption peaks of the one or more target gases. Based on the comparison, the signal processor 120 may determine a presence of one or more target gases in the test space 112.

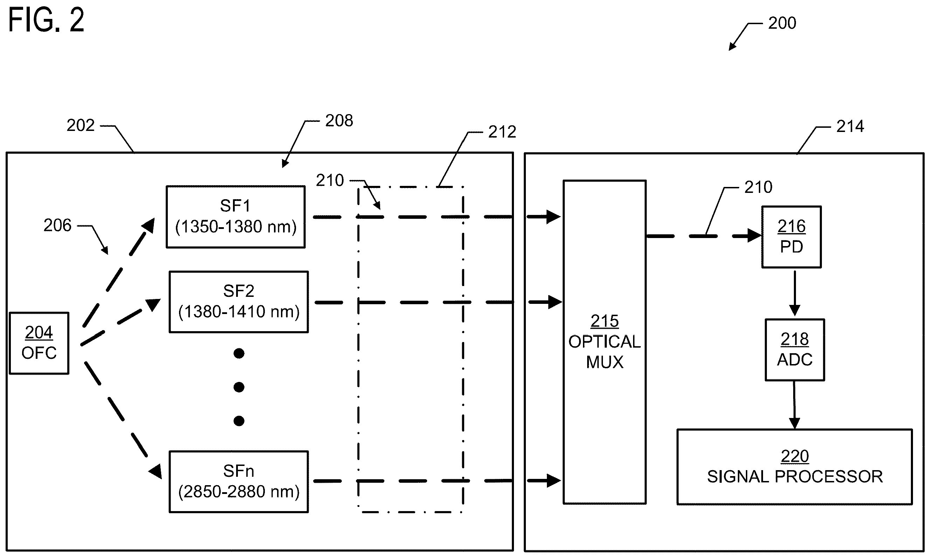

Referring to FIG. 2, a gas detection system 200 may provide an alternative configuration for detecting one or more target gases using spectral filtering with optical multiplexing capabilities. The gas detection system 200 may include a first substrate 202 and a second substrate 214, which may be configured to house optical and electronic components in a multiplexed detection arrangement.

The first substrate 202 may contain an optical frequency comb 204, which may generate laser light 206 across a range of wavelengths for gas detection applications. The optical frequency comb 204 may provide broadband spectral output with high resolution, enabling precise wavelength control for narrow bin spectroscopic analysis. The laser light 206 may be distributed to multiple optical components positioned on the first substrate 202.

The laser light 206 may be directed to spectral filters 208 positioned on the first substrate 202. The spectral filters 208 may include multiple filter elements, such as SF1 configured for wavelengths from 1350-1380 nm, SF2 configured for wavelengths from 1380-1410 nm, and SFn configured for wavelengths from 2850-2880 nm. Each spectral filter 208 may be tuned to pass a specific narrow wavelength range corresponding to distinct spectral absorption peaks of target gases. The spectral filters 208 may filter the incoming laser light 206 to produce filtered laser light 210 at designated wavelength ranges.

With continued reference to FIG. 2, the filtered laser light 210 from each spectral filter 208 may pass through a test space 212, where the light may interact with gas species to be detected. The test space 212 may allow the filtered laser light 210 to undergo absorption or transmission changes based on the molecular characteristics of gases present in the test space 212. After interaction with the gas species, the filtered laser light 210 may carry spectral information indicative of the gas composition and concentration.

The second substrate 214 may house detection and processing components configured for multiplexed signal analysis. The second substrate 214 may include an optical multiplexer 215, which may receive the filtered laser light 210 from the multiple spectral filters 208. The optical multiplexer 215 may be configured to sequentially route the filtered laser light 210 from different spectral filter channels to a single detection element. The optical multiplexer 215 may implement programmed channel selection controlled by a scanning algorithm for sequential filter channel selection.

As further shown in FIG. 2, the second substrate 214 may include a photodetector 216, which may receive the sequentially routed filtered laser light 210 from the optical multiplexer 215. The photodetector 216 may comprise only one photodetector element, in contrast to systems utilizing multiple parallel photodetectors. The optical multiplexer 215 may direct light separately from each of the spectral filters 208 to the photodetector 216 in a time-sequential manner. This configuration may reduce system complexity and component costs while maintaining the capability to analyze multiple discrete wavelength bins.

The photodetector 216 may convert the optical signals into electrical signals corresponding to the light intensity received from each spectral filter channel. The second substrate 214 may further include an analog-to-digital controller 218, which may receive the electrical signals from the photodetector 216. The analog-to-digital controller 218 may convert the analog electrical signals into digital data while preserving the temporal sequence information corresponding to each spectral filter channel.

The gas detection system 200 may include a signal processor 220 positioned on the second substrate 214. The signal processor 220 may analyze the digital signals from the analog-to-digital controller 218 to determine absorption characteristics at each discrete wavelength bin. The signal processor 220 may correlate the temporally sequenced detection data with the corresponding spectral filter channels to reconstruct spectral information for gas identification and quantification. The signal processor 220 may determine the presence and concentration of target gases based on the absorption patterns observed across the multiple wavelength bins accessed through the optical multiplexer 215.

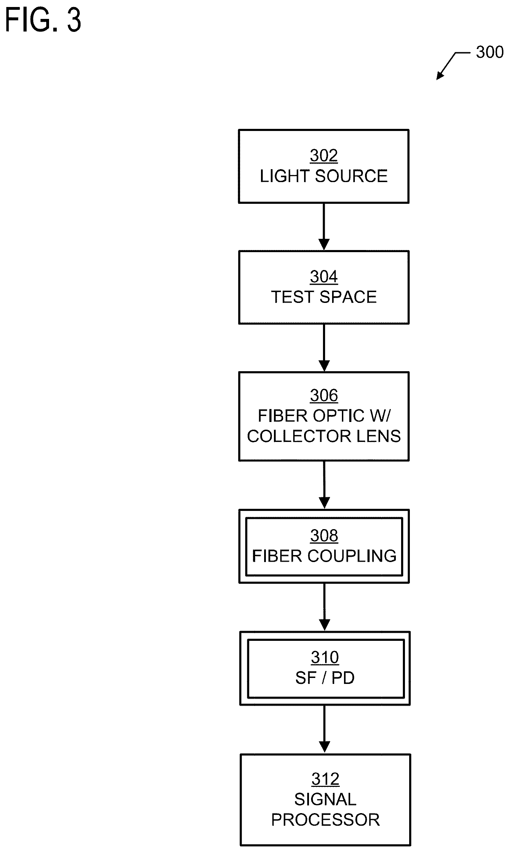

Referring to FIG. 3, one example of a component arrangement 300 for a gas detection system is illustrated. The component arrangement 300 may demonstrate a sequential arrangement of components that enables gas detection through discrete wavelength bin analysis with broadband light interaction.

The component arrangement 300 may begin with a light source 302, which may generate laser light for gas detection applications. The light source 302 may comprise an optical frequency comb capable of producing broadband spectral output across multiple wavelength ranges.

The light from the light source 302 may be directed to a test space 304, which may be positioned between the light source 302 and subsequent filtering components. The test space 304 may be configured as either an open path configuration or a gas cell configuration for gas sample interaction with light. In the open path configuration, the test space 304 may allow light to travel through an open environment where target gases may be present. In the gas cell configuration, the test space 304 may comprise an enclosed chamber containing gas samples to be analyzed.

Following interaction with the gas sample, the light may be collected and transmitted through a fiber optic cable with light collector lens 306. The fiber optic cable with light collector lens 306 may capture the light that has interacted with the gas species and may direct the light to subsequent processing components. The fiber optic cable with light collector lens 306 may provide efficient light collection and transmission while maintaining spectral information acquired during gas interaction.

The component arrangement 300 may continue with a fiber coupling 308, where the collected light may be coupled into an integrated photonics substrate. The fiber coupling 308 may facilitate the transfer of the optical signal from the fiber optic cable with light collector lens 306 to on-chip optical components. The fiber coupling 308 may utilize in-plane coupling mechanisms to direct light into waveguides positioned on the integrated photonics substrate.

As further shown in FIG. 3, the coupled light may proceed to spectral filters / photodetectors 310, which may be implemented as integrated silicon photonics building blocks. The spectral filters / photodetectors 310 may filter the light using at least three spectral filters, where each spectral filter may have a filtering range corresponding to a separate one of the spectral absorption peaks of only one of the one or more target gases. The spectral filters / photodetectors 310 may detect the filtered light using one or more photodetectors, where the one or more photodetectors may comprise one photodetector corresponding to each of the spectral filters.

The fiber coupling 308 and the spectral filters / photodetectors 310 may be implemented as integrated silicon photonics building blocks, as indicated by the double-line representation in the component arrangement 300.

The component arrangement 300 may conclude with a signal processor 312, which may analyze the detected signals to determine gas presence and concentration. The signal processor 312 may determine an absorption strength of an output of each of the spectral filters based on the intensity measurements from the photodetectors. The signal processor 312 may compare the absorption strength of the output of each of the spectral filters to the spectral absorption peaks of the one or more target gases using reference spectral libraries or predetermined threshold values. Based on the comparison, the signal processor 312 may determine a presence of one or more target gases in the test space 304. The signal processor 312 may implement digital signal processing algorithms to analyze the spectral features and provide quantitative gas concentration measurements.

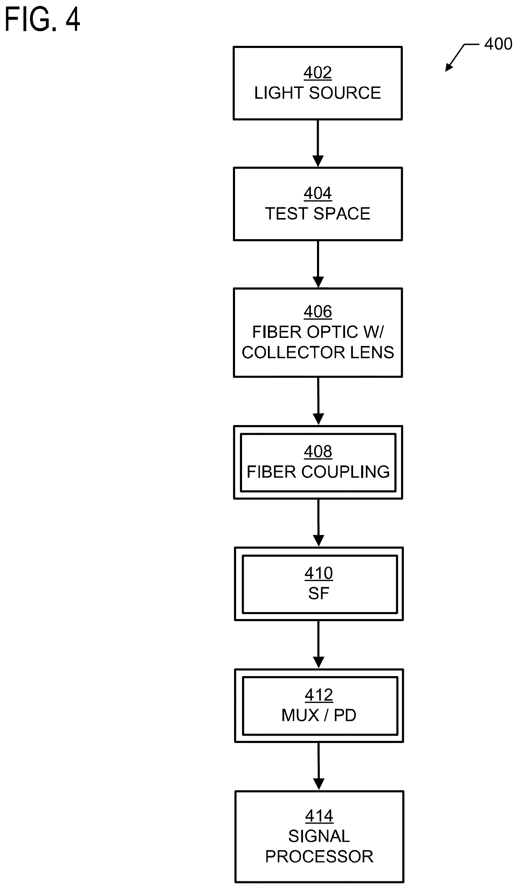

Referring to FIG. 4, another example of a component arrangement 400 for a gas detection system is illustrated. The component arrangement 400 may demonstrate a sequential arrangement of components that enables gas detection through discrete wavelength bin analysis while reducing system complexity through multiplexed detection.

The component arrangement 400 may begin with a light source 402, which may generate laser light for spectroscopic gas analysis. The light source 402 may comprise an optical frequency comb, tunable laser diode, or femtosecond laser capable of producing broadband spectral output across wavelength ranges encompassing the spectral absorption peaks of target gases. The light source 402 may provide sufficient spectral resolution to enable effective utilization of narrow wavelength bin filtering techniques.

The light from the light source 402 may be directed to a test space 404, which may be positioned in the incoming light path before spectral filtering operations. The test space 404 may be configured to allow interaction between the broadband light and gas species present in the test space 404. The light may pass through the test space 404, where target gases may absorb light at their characteristic spectral absorption peaks.

Following interaction with the gas sample, the light may be collected by a fiber optic cable with light collector lens 406. The fiber optic cable with light collector lens 406 may gather the light that has interacted with the gas sample and may direct the collected light to subsequent processing components.

The component arrangement 400 may continue with a fiber coupling 408, where the collected light may be coupled into an integrated photonics substrate. The fiber coupling 408 may facilitate the transfer of the optical signal from the fiber optic cable with light collector lens 406 to on-chip optical components implemented using integrated silicon photonics technology. The fiber coupling 408 may utilize coupling mechanisms that preserve spectral information while directing light into waveguides positioned on the integrated photonics substrate.

As further shown in FIG. 4, the coupled light may proceed to spectral filters 410. The spectral filters 410 may filter the light using at least three spectral filters, where each spectral filter may have a filtering range corresponding to a separate one of the spectral absorption peaks of only one of the one or more target gases.

The filtered light from the spectral filters 410 may proceed to an optical multiplexer / photodetector 412, which may combine optical multiplexing functionality with photodetection capabilities. The optical multiplexer / photodetector 412 may comprise only one photodetector, where an optical multiplexer may direct light separately from each of the spectral filters 410 to the one photodetector in a sequential manner.

The fiber coupling 408, the spectral filters 410, and the multiplexer / photodetector 412 may be implemented as integrated silicon photonics building blocks, as indicated by the double-line representation in the component arrangement 400.

The optical multiplexer component of the optical multiplexer / photodetector 412 may implement programmed channel selection to sequentially route filtered light from different spectral filter channels to the single photodetector. The photodetector component may convert the sequentially received optical signals into electrical signals corresponding to the light intensity from each spectral filter channel.

The component arrangement 400 may conclude with a signal processor 414, which may analyze the electrical signals from the optical multiplexer / photodetector 412. The signal processor 414 may determine an absorption strength of an output of each of the spectral filters 410 based on the temporally sequenced detection data. The signal processor 414 may correlate the sequential detection measurements with the corresponding spectral filter channels to reconstruct spectral information for each discrete wavelength bin. The signal processor 414 may compare the absorption strength of the output of each of the spectral filters 410 to the spectral absorption peaks of the one or more target gases using reference spectral data or predetermined threshold values. Based on the comparison, the signal processor 414 may determine a presence of one or more target gases in the test space 404, providing gas identification and quantification through the multiplexed detection approach.

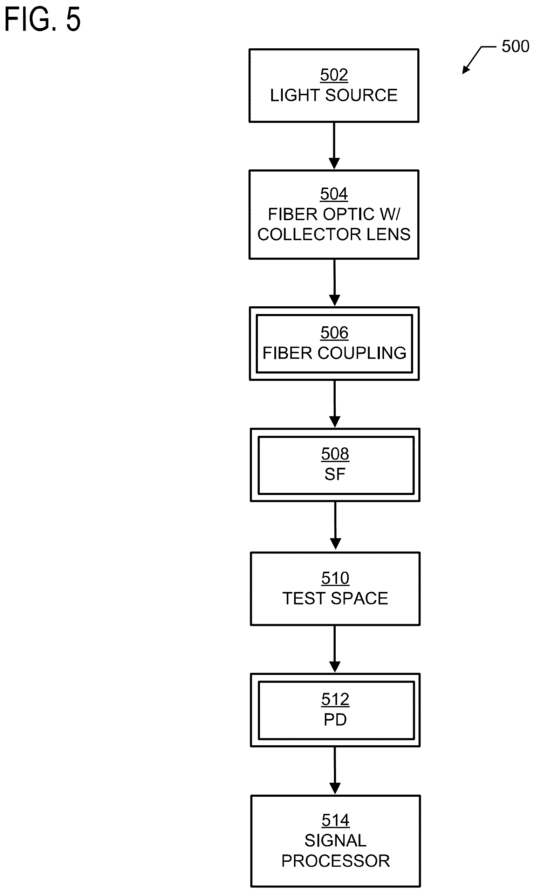

Referring to FIG. 5, another example of a component arrangement 500 for a gas detection system is illustrated. The component arrangement 500 may demonstrate a sequential arrangement of components that enables gas detection through discrete wavelength bin analysis, where filtered wavelength bins interact with the gas sample before detection.

The component arrangement 500 may begin with a light source 502, which may generate laser light for spectroscopic gas analysis. The light source 502 may comprise an optical frequency comb, tunable laser diode, or femtosecond laser capable of producing broadband spectral output across wavelength ranges encompassing the spectral absorption peaks of target gases. The light source 502 may provide sufficient spectral resolution to enable effective utilization of narrow wavelength bin filtering techniques for enhanced gas selectivity.

The light from the light source 502 may be directed to a fiber optic cable with light collector lens 504, which may collect and transmit the broadband light to subsequent processing components. The fiber optic cable with light collector lens 504 may provide efficient light collection and transmission while maintaining the spectral characteristics of the emitted light.

With continued reference to FIG. 5, the component arrangement 500 may continue with a fiber coupling 506, where the light may be coupled into an integrated photonics substrate. The fiber coupling 506 may facilitate the transfer of the optical signal from the fiber optic cable with light collector lens 504 to on-chip optical components implemented using integrated silicon photonics technology. The fiber coupling 506 may utilize coupling mechanisms that preserve spectral information while directing light into waveguides positioned on the integrated photonics substrate.

Following the fiber coupling 506, the light may pass through spectral filters 508. The spectral filters 508 may filter the light using at least three spectral filters, where each spectral filter may have a filtering range corresponding to a separate one of the spectral absorption peaks of only one of the one or more target gases. The spectral filters 508 may produce filtered light at specific narrow wavelength ranges corresponding to target gas absorption features.

As further shown in FIG. 5, the filtered light from the spectral filters 508 may interact with a test space 510, where gas samples to be analyzed may be present. The test space 510 may be positioned between the spectral filters 508 and subsequent detection components, allowing filtered wavelength bins to interact with the gas sample before detection. This configuration may enable selective interaction between narrow wavelength ranges and target gases, where each filtered wavelength bin may undergo absorption changes specific to the molecular characteristics of gases present in the test space 510.

The positioning of the test space 510 after the spectral filters 508 may provide advantages in terms of signal-to-noise ratio and detection sensitivity. By filtering the light into narrow wavelength bins before gas interaction, the system may reduce noise contributions from wavelength ranges that do not correspond to target gas absorption features. The filtered light may interact with gas species in the test space 510, resulting in absorption characteristics that are specific to the narrow wavelength ranges and the molecular structure of each gas species present.

The light that has interacted with the gas in the test space 510 may reach photodetectors 512. The photodetectors 512 may detect the optical signals and convert the optical signals to electrical signals corresponding to the light intensity received from each discrete wavelength bin after gas interaction. The photodetectors 512 may comprise one photodetector corresponding to each of the spectral filters 508, enabling parallel detection of multiple wavelength bins simultaneously.

The fiber coupling 506, the spectral filters 508, and the photodetectors 512 may be implemented as integrated silicon photonics building blocks, as indicated by the double-line representation in the component arrangement 500.

The component arrangement 500 may conclude with a signal processor 514, which may process the electrical signals from the photodetectors 512 to identify and quantify the gas species present in the test space 510. The signal processor 514 may determine an absorption strength of an output of each of the spectral filters 508 based on the intensity measurements from the photodetectors 512. The signal processor 514 may compare the absorption strength of the output of each of the spectral filters 508 to the spectral absorption peaks of the one or more target gases using reference spectral libraries or predetermined threshold values. Based on the comparison, the signal processor 514 may determine a presence of one or more target gases in the test space 510, providing gas identification and quantification through the filtered wavelength bin approach where the test space 510 is positioned between the spectral filters 508 and the photodetectors 512.

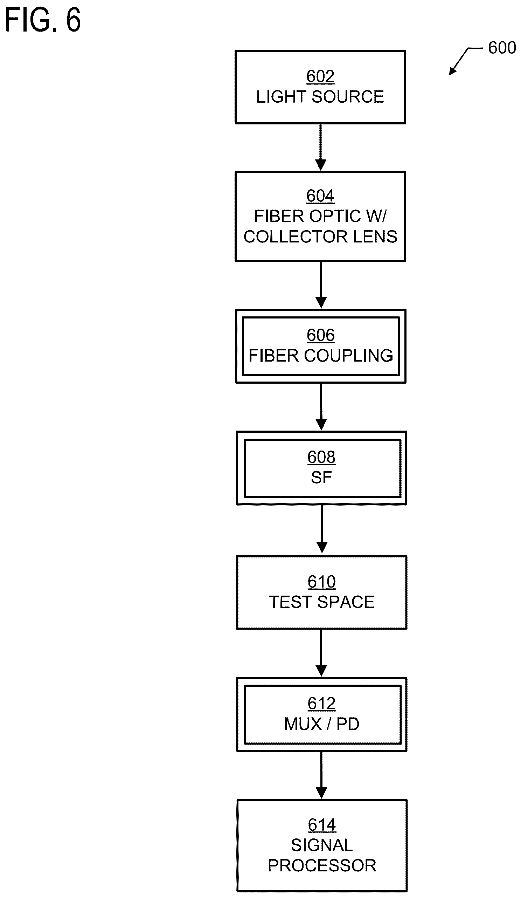

Referring to FIG. 6, another example of a component arrangement 600 for a gas detection system is illustrated. The component arrangement 600 may demonstrate a sequential arrangement of components that enables gas detection through discrete wavelength bin analysis while utilizing multiplexed detection to reduce system complexity.

The component arrangement 600 may begin with a light source 602, which may generate laser light for spectroscopic gas analysis. The light source 602 may comprise an optical frequency comb, tunable laser diode, or femtosecond laser capable of producing broadband spectral output across wavelength ranges encompassing the spectral absorption peaks of target gases. The light source 602 may provide sufficient spectral resolution to enable effective utilization of narrow wavelength bin filtering techniques for enhanced gas selectivity and detection sensitivity.

The light from the light source 602 may be directed to a fiber optic cable with light collector lens 604, which may collect and transmit the broadband light to subsequent processing components. The fiber optic cable with light collector lens 604 may provide efficient light collection and transmission while maintaining the spectral characteristics of the emitted light across the broad wavelength range.

With continued reference to FIG. 6, the component arrangement 600 may continue with a fiber coupling 606, where the light may be coupled into an integrated photonics substrate. The fiber coupling 606 may facilitate the transfer of the optical signal from the fiber optic cable with light collector lens 604 to on-chip optical components implemented using integrated silicon photonics technology. The fiber coupling 606 may utilize coupling mechanisms that preserve spectral information while directing light into waveguides positioned on the integrated photonics substrate.

Following the fiber coupling 606, the light may pass through spectral filters 608. The spectral filters 608 may filter the light using at least three spectral filters, where each spectral filter may have a filtering range corresponding to a separate one of the spectral absorption peaks of only one of the one or more target gases. The spectral filters 608 may produce filtered light at specific narrow wavelength ranges corresponding to target gas absorption features.

As further shown in FIG. 6, the filtered light from the spectral filters 608 may interact with a test space 610, where gas samples to be analyzed may be present. The test space 610 may be positioned between the spectral filters 608 and subsequent detection components, allowing filtered wavelength bins to interact with the gas sample before detection. This configuration may enable selective interaction between narrow wavelength ranges and target gases, where each filtered wavelength bin may undergo absorption changes specific to the molecular characteristics of gases present in the test space 610.

After passing through the test space 610, the light may be directed to an optical multiplexer / photodetector 612. The optical multiplexer / photodetector 612 may combine optical multiplexing functionality with photodetection capabilities in a single integrated component. The optical multiplexer / photodetector 612 may comprise only one photodetector, where an optical multiplexer may sequentially select spectral filter channels and direct light separately from each of the spectral filters 608 to the one photodetector.

The optical multiplexer component of the optical multiplexer / photodetector 612 may implement programmed channel selection to sequentially route filtered light from different spectral filter channels to the single photodetector. The photodetector component may convert the sequentially received optical signals into electrical signals corresponding to the light intensity from each spectral filter channel after gas interaction in the test space 610.

The fiber coupling 606, the spectral filters 608, and the multiplexer / photodetector 612 may be implemented as integrated silicon photonics building blocks, as indicated by the double-line representation in the component arrangement 600.

The component arrangement 600 may conclude with a signal processor 614, which may process the electrical signals from the optical multiplexer / photodetector 612 to identify and quantify the gas species present in the test space 610. The signal processor 614 may determine an absorption strength of an output of each of the spectral filters 608 based on the temporally sequenced detection data from the multiplexed photodetector. The signal processor 614 may correlate the sequential detection measurements with the corresponding spectral filter channels to reconstruct spectral information for each discrete wavelength bin after gas interaction.

The signal processor 614 may compare the absorption strength of the output of each of the spectral filters 608 to the spectral absorption peaks of the one or more target gases using reference spectral libraries or predetermined threshold values. Based on the comparison, the signal processor 614 may determine a presence of one or more target gases in the test space 610. This configuration may provide gas identification and quantification through the combination of filtered wavelength bin analysis, where the test space 610 is positioned between the spectral filters 608 and detection components, with optical multiplexing to enable single photodetector operation while maintaining multi-wavelength analysis capabilities.

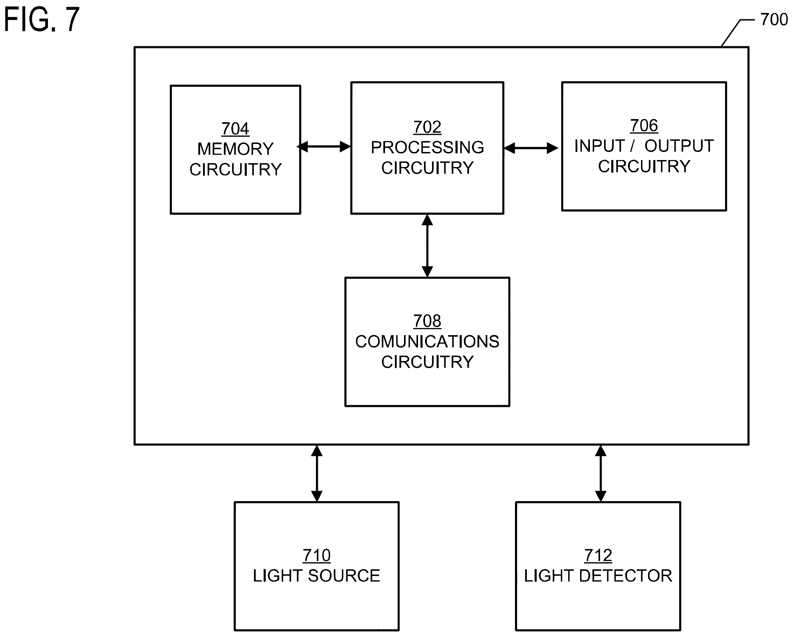

Referring to FIG. 7, a control device 700 may provide centralized coordination and processing capabilities for gas sensing operations. The control device 700 may serve as a computational platform that manages the various components of a gas detection system and implements analytical algorithms for gas detection and quantification.

The control device 700 may include processing circuitry 702, which may serve as the central computational element for coordinating gas sensing operations. The processing circuitry 702 may be connected to various other circuitry components within the control device 700, enabling data exchange and coordination between these components. The processing circuitry 702 may implement computational algorithms for analyzing spectral data and determining gas presence and concentration based on absorption characteristics at discrete wavelength bins.

The control device 700 may further include memory circuitry 704, which may be connected to the processing circuitry 702. The memory circuitry 704 may store data and instructions that may be accessed by the processing circuitry 702 during gas sensing operations. The memory circuitry 704 may contain reference spectral libraries corresponding to target gases, calibration data for the spectral filters, and analytical algorithms for gas identification and quantification. The memory circuitry 704 may also store measurement data collected during gas sensing operations and intermediate computational results generated during spectral analysis.

With continued reference to FIG. 7, the control device 700 may include input/output circuitry 706, which may be connected to the processing circuitry 702. The input/output circuitry 706 may facilitate interaction with external devices or systems, enabling the control device 700 to receive control commands and transmit gas detection results. The input/output circuitry 706 may provide interfaces for user interaction, data logging, and integration with industrial control systems or safety monitoring networks.

The control device 700 may include communications circuitry 708, which may be connected to the processing circuitry 702. The communications circuitry 708 may enable communication with external components and may facilitate data transmission between the control device 700 and other system elements. The communications circuitry 708 may support various communication protocols for integration with industrial networks, remote monitoring systems, or data acquisition platforms.

As further shown in FIG. 7, the control device 700 may include a light source 710 and a light detector 712, which may be connected to the communications circuitry 708. The light source 710 may generate light for transmission or interaction with a test space, providing the optical energy needed for gas detection operations. The light source 710 may comprise an optical frequency comb, tunable laser diode, or other high-resolution light source capable of generating light across wavelength ranges encompassing the spectral absorption peaks of target gases.

The light detector 712 may receive and detect light signals after interaction with gas samples in the test space. The light detector 712 may convert optical signals into electrical signals that may be processed by the control device 700 for gas analysis. The light detector 712 may comprise photodetectors configured to detect light at specific wavelength bins corresponding to target gas absorption features.

The processing circuitry 702 may manage the overall operation of the control device 700, coordinating the functions of the various circuitry components to achieve gas detection functionality. The processing circuitry 702 may implement a logic algorithm that assesses relative absorption strength in bins where target gases are expected to be present versus bins where target gases are not expected to be present. This logic algorithm may analyze absorption measurements from multiple discrete wavelength bins to determine gas presence with enhanced selectivity.

The logic algorithm implemented by the processing circuitry 702 may evaluate absorption strength measurements from spectral filters configured to pass wavelengths corresponding to known absorption peaks of target gases. The processing circuitry 702 may compare these measurements to absorption strength measurements from spectral filters configured to pass wavelengths where target gases exhibit minimal or no absorption. The processing circuitry 702 may provide selectivity confidence based on relative strength from both types of bins, where strong absorption in expected bins combined with minimal absorption in non-expected bins may indicate high confidence in target gas detection.

The processing circuitry 702 may implement threshold-based analysis, pattern recognition algorithms, or machine learning techniques to assess the relative absorption patterns across multiple wavelength bins. The logic algorithm may account for potential interference from other gas species by analyzing absorption patterns across multiple discrete wavelength bins rather than relying on single wavelength measurements. The processing circuitry 702 may generate confidence metrics that quantify the reliability of gas detection results based on the consistency of absorption patterns across expected and non-expected wavelength bins.

The gas detection system may incorporate at least three waveguides, where each waveguide may be positioned to direct light from the light source to a respective spectral filter. The waveguides may be realized using silicon or silicon nitride wires on silicon-on-insulator substrates to reduce coupling losses and insertion losses while improving signal-to-noise ratio. The waveguides may provide efficient light confinement for each spectral filter channel, enabling precise distribution of optical signals across multiple filtering elements.

The waveguides may be fabricated using semiconductor manufacturing processes that enable precise dimensional control and optical performance optimization. Silicon waveguides may provide effective light guidance for wavelength ranges in the near-infrared and mid-infrared regions, while silicon nitride waveguides may extend operational capabilities to shorter wavelengths including visible and ultraviolet regions. The silicon-on-insulator substrate configuration may provide optical isolation between adjacent waveguides while maintaining low propagation losses.

The gas detection system may operate across wavelength ranges from 180 nanometers to 12,000 nanometers, covering ultraviolet, visible, near-infrared, mid-infrared, and far-infrared spectral regions. This broad wavelength coverage may enable detection of diverse gas species that exhibit characteristic absorption features across different portions of the electromagnetic spectrum.

The gas detection system may include on-chip fiber coupling methods to couple incoming light to the spectral filters with efficient light confinement. The fiber coupling methods may utilize grating couplers, edge couplers, or other coupling structures that enable efficient transfer of optical signals from external fiber optic components to on-chip waveguides. The coupling structures may be designed to minimize insertion losses while maintaining spectral fidelity across the operational wavelength range.

The gas detection system may include 10 to 20 or more spectral filters on a single chip, where the number of bins (and therefore spectral filters) may determine the selectivity among gases. A larger number of spectral filters may provide enhanced gas discrimination capabilities by enabling analysis of absorption characteristics across more discrete wavelength bins. The scalable filter array configuration may allow customization of the gas detection system for specific applications by selecting appropriate numbers and wavelength positions of spectral filters based on target gas species requirements.

The gas detection system may further include one or more additional spectral filters, where each additional spectral filter may have a filtering range that does not correspond to any of the spectral absorption peaks of one or more of the one or more target gases. These additional spectral filters may serve as reference channels for confirming gas detection results by providing measurements at wavelength regions where target gases exhibit minimal or no absorption. The processing circuitry may determine an absorption strength of an output of each of the additional spectral filters and may compare the absorption strength of the output of each of the additional spectral filters to the spectral absorption peaks of the one or more target gases. Based on the comparison, the processing circuitry may confirm a presence of one or more target gases by verifying that absorption occurs primarily at expected wavelength bins while remaining minimal at reference wavelength bins.

All of the spectral filters may be formed on a same substrate using integrated silicon photonics. The integrated silicon photonics approach may enable fabrication of multiple spectral filters with precise wavelength control and consistent optical performance characteristics. The single substrate implementation may provide advantages in terms of manufacturing scalability, component alignment, and system compactness compared to discrete optical component approaches.

The gas detection system may provide detection capabilities for gas concentrations at parts per billion to parts per trillion levels through integration of absorption coefficients across multiple spectral bins. This enhanced sensitivity may be achieved by analyzing absorption characteristics at multiple discrete wavelength bins corresponding to different spectral absorption peaks of target gases. The integration of absorption measurements across multiple bins may provide cumulative signal strength that enables detection of trace gas concentrations that may be below detection limits of single-wavelength analysis methods.

The integration process may involve summing absorption coefficients from multiple spectral bins where target gases exhibit characteristic absorption features. Each spectral bin may contribute absorption information corresponding to specific molecular interactions at discrete wavelength ranges. The cumulative absorption signal from multiple bins may provide enhanced signal strength compared to individual wavelength measurements, enabling detection of gas species present at extremely low concentrations in industrial environments.

The gas detection system may be implemented as a fully integrated spectrometer on chip configuration, where all components including light source, spectral filters, and photodetectors may be realized on a single silicon photonics substrate. This monolithic integration approach may provide significant advantages in terms of system compactness, manufacturing scalability, and component alignment precision compared to discrete optical component implementations.

The integrated silicon photonics platform may enable fabrication of multiple spectral filters, waveguides, and detection elements using semiconductor manufacturing processes. The single substrate implementation may eliminate the need for discrete optical components and complex optical alignment procedures that are typically required in traditional spectroscopic systems. The monolithic chip integration may result in compact form factors suitable for deployment in space-constrained industrial environments where traditional spectroscopic equipment may be impractical.

The compact form factor enabled by monolithic chip integration may facilitate implementation in handheld instruments for at-site applications or in-line process monitoring systems. The reduced size and weight compared to traditional spectroscopic equipment may enable portable gas detection capabilities that were previously limited to laboratory environments. The integrated approach may also provide improved mechanical stability and reduced sensitivity to environmental vibrations compared to systems utilizing discrete optical components.

The gas detection system may provide reduced complexity compared to traditional spectroscopy systems that require wavelength sweeping or complex optical arrangements. Traditional spectroscopic methods may involve sweeping light across broad wavelength ranges using mechanical scanning mechanisms, complex filter wheels, or sophisticated wavelength control systems. The discrete wavelength bin approach may eliminate the need for wavelength scanning by utilizing fixed spectral filters tuned to specific wavelength ranges of interest.

The gas detection system may provide improved selectivity for distinguishing gases with overlapping spectral features through analysis of absorption patterns across multiple discrete wavelength bins. Traditional spectroscopic methods may encounter difficulties when target gases exhibit overlapping absorption features in similar wavelength ranges, leading to ambiguous identification results or reduced quantification accuracy.

The discrete wavelength bin approach may address overlapping spectral features by analyzing absorption characteristics at multiple carefully selected wavelength positions where target gases exhibit distinctive absorption patterns. The system may utilize spectral bins positioned at wavelength ranges where specific target gases exhibit strong absorption while other potentially interfering gases exhibit minimal absorption. Additional spectral bins may be positioned at wavelength ranges where target gases exhibit minimal absorption, providing reference measurements for confirming gas identification results.

The multi-bin analysis approach may enable discrimination between gases with similar molecular structures or overlapping absorption features by comparing absorption patterns across multiple wavelength positions. The pattern recognition capabilities may provide enhanced selectivity compared to single-wavelength measurements, enabling accurate identification and quantification of individual gas species in complex gas mixtures.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A gas detection system for detecting one or more target gases, each target gas having a plurality of spectral absorption peaks, the system comprising:
a light source;
at least three spectral filters, each spectral filter having a filtering range corresponding to a separate one of the spectral absorption peaks of only one of the one or more target gases;
one or more photodetectors to receive light from the light source; and
processing circuitry to (i) determine an absorption strength of an output of each of the spectral filters, (ii) compare the absorption strength of the output of each of the spectral filters to the spectral absorption peaks of the one or more target gases, and (iii) based on the comparison, determining a presence of one or more target gases.

2. The system of claim 1, wherein a size of the filtering range of each of the spectral filters is less than 50 nanometers.

3. The system of claim 1, wherein the light source comprises an optical frequency comb.

4. The system of claim 1, further comprising an optical multiplexer;
wherein the one or more photodetectors comprise only one photodetector; and
wherein the optical multiplexer directs light separately from each of the spectral filters to the one photodetector.

5. The system of claim 1, wherein the one or more photodetectors comprise one photodetector corresponding to each of the spectral filters.

6. The system of claim 1, further comprising at least three waveguides, each waveguide positioned to direct light from the light source to a respective spectral filter.

7. The system of claim 6, further comprising one or more additional spectral filters, each additional spectral filter having a filtering range that does not correspond to any of the spectral absorption peaks of one or more of the one or more target gases;
wherein the processing circuitry further (i) determines an absorption strength of an output of each of the additional spectral filters, (ii) compares the absorption strength of the output of each of the additional spectral filters to the spectral absorption peaks of the one or more target gases, and, (iii) based on the comparison, confirms a presence of one or more target gases.

8. The system of claim 1, wherein a test space of the system is positioned between the light source and the spectral filters.

9. The system of claim 1, wherein a test space of the system is positioned between the spectral filters and the one or more photodetectors.

10. The system of claim 1, wherein all of the spectral filters are formed on a same substrate using integrated silicon photonics.

11. A method for detecting one or more target gases, each target gas having a plurality of spectral absorption peaks, the method comprising:
emitting light from a light source;
filtering the light using at least three spectral filters, each spectral filter having a filtering range corresponding to a separate one of the spectral absorption peaks of only one of the one or more target gases;
detecting the filtered light using one or more photodetectors to receive light from the light source;
determining an absorption strength of an output of each of the spectral filters;
comparing the absorption strength of the output of each of the spectral filters to the spectral absorption peaks of the one or more target gases; and
based on the comparison, determining a presence of one or more target gases.

12. The method of claim 11, wherein the one or more photodetectors comprise only one photodetector; and
wherein an optical multiplexer directs light separately from each of the spectral filters to the one photodetector.

13. The method of claim 11, wherein the one or more photodetectors comprise one photodetector corresponding to each of the spectral filters.

14. The method of claim 11, further comprising directing light from the light source to the spectral filters using at least three waveguides, each waveguide positioned to direct light from the light source to a respective spectral filter.

15. The method of claim 14, further comprising:
filtering the light using one or more additional spectral filters, each additional spectral filter having a filtering range that does not correspond to any of the spectral absorption peaks of one or more of the one or more target gases;
determining an absorption strength of an output of each of the additional spectral filters;
comparing the absorption strength of the output of each of the additional spectral filters to the spectral absorption peaks of the one or more target gases; and
based on the comparison, confirming a presence of one or more target gases.
